# EUROPEAN PATENT SPECIFICATION

(11) **EP 2 452 567 B1**
(45) Date of publication and mention of the grant of the patent: **11.01.2017**
(21) Application number: 12154529.7
(22) Date of filing: 27.09.2006
(51) Int. Cl.: A23C 17/00, A23C 9/148, A23J 7/00, A23C 11/00, A23L 33/10, A23L 33/115

(54) **POWDER BEING RICH IN MILK-ORIGIN COMPLEX LIPIDS**
PULVER MIT EINEM HOHEN GEHALT AN AUS MILCH STAMMENDEN KOMPLEXEN LIPIDEN
POUDRE RICHE EN LIPIDES COMPLEXES PROVENANT DU LAIT

(30) Priority: 30.09.2005 JP 2005286602
(43) Date of publication of application: 16.05.2012
(62) Divisional of application: 06810632.7
(73) Proprietor: Megmilk Snow Brand Co., Ltd., Higashi-ku, Sapporo (JP)
(72) Inventor: Miura, Susumu, Kawagoe-shi, Saitama 350-1165 (JP); Kojima, Kenji, Kawagoe-shi, Saitama 350-1165 (JP); Nakano, Taku, Kawagoe-shi, Saitama 350-1165 (JP); Kato, Ken, Kawagoe-shi, Saitama 350-1165 (JP); Tomizawa, Akira, Kawagoe-shi, Saitama 350-1165 (JP); Yoshioka, Toshimoto, Kawagoe-shi, Saitama 350-1165 (JP)
(74) Representative: Vossius & Partner Patentanwälte Rechtsanwälte mbB

(56) References cited:
- EP-A- 1 041 081
- EP-A- 1 570 743
- WO-A-02/34062
- WO-A-2006/128465
- JP-A- 5 292 880
- JP-A- 11 263 731
- SACHDEVA S ET AL: "RECOVERY OF PHOSPHOLIPIDS FROM BUTTERMILK USING MEMBRANE PROCESSING", KIELER WIRTSCHAFTLICHE FORSCHUNGSBERICHTE, VERLAG TH. MANN, GELSENKIRCHEN, DE, vol. 49, no. 1, 1 January 1997 (1997-01-01), pages 47-68, XP001014232, ISSN: 0023-1347
- ROMBAUT ET AL: "Microfiltration of Butter Serum Upon Casein Micelle Destabilization", JOURNAL OF DAIRY SCIENCE, vol. 89, no. 6, June 2006 (2006-06), pages 1915-1925, XP002535317,

## Description

### Technical Field

The present invention relates to a powder with high milk-derived complex lipid content. More specifically, the present invention relates to a powder with high milk-derived complex lipid content that contains milk-derived phospholipids and milk-derived ganglioside at high concentrations.

A powder with high milk-derived complex lipid content obtained in accordance with the present invention can be utilized widely as a material for functional food, mother's milk substitute or drug.

### Related Art

Soybean lecithin and egg yolk lecithin, which are crude phospholipid products derived from natural substances, are utilized widely as emulsifiers and other additives in the production of food. In recent years, phosphatidylserine, phosphatidylcholine, sphingomyelin and other milk-derived phospholipids are drawing the attention after reports of various physiological functions exhibited by these phospholipids.

It has been reported that phosphatidylserine and phosphatidylcholine are involved deeply in the development and maintenance of neurological function and motor function, and that sphingomyelin helps the intestinal tract to mature in small children. Sphingomyelin is a substance that accounts for approx. 30% of all phospholipids in milk and has a structure comprising phosphocholine bonding with a ceramide skeleton constituted by sphingosine and fatty acids.

Sphingomyelin exists in brain and nerve tissues in large quantities, but its content is minimal in soybean phospholipids and egg yolk phospholipids.

In the meantime, milk-derived ganglioside has a structure comprising sialic acid bonding, via sugar, with a ceramide skeleton constituted by sphingosine and fatty acids. It is present mainly in the forms of GD3 and GM3 and found widely in cow brain and milk.

In recent years, biochemical research of milk-derived ganglioside is making progress and revealing such physiological functions of milk-derived ganglioside as cell differentiation, facilitation of neurological function, and protection of virus infection.

On the other hand, butter serum is a water-phase component discharged when high fat cream with a fat content of 60% or more, obtained by separating raw milk using a separator and again separating the obtained cream with a fat content of 40 to 50% using a separator, is heated or sheared to cause phase inversion, or butter serum also refers to a water-phase component that separates from butter when butter is melted under heat, and thus butter serum is different from butter milk which is a water-phase component and byproduct generated from the butter manufacturing process. Butter serum is known to contain a lot of fat globule membrane components found in milk, and it is also a rich source of complex lipids such as phospholipids and glycolipids that constitute fat globule membrane components. The solid content of milk-derived complex lipids in butter serum is known to be 5 percent by weight or more, which is 10 times or more of the solid content of milk-derived complex lipids in butter milk of just 0.5 percent by weight. In addition, among various methods for preparing a material containing milk-derived complex lipids, a method to adjust the pH value of a butter milk or butter milk powder reconstituted liquid to the acid range, cause isoelectric precipitation to remove the produced protein sediments, and then filter the supernatant by means of microfiltration and dry the obtained concentrate to obtain the a powder with high content of phospholipids, is known (Patent Literature 1).

There is also a method to extract a butter milk, skim milk powder or milk product using a solvent prepared by mixing chloroform, methanol and water at a ratio of 4 to 8 to 3, acetone, or other organic solvent (Patent Literature 2).

However, while it does not use any organic solvent, the method described in Patent Literature 1 uses butter milk or butter milk reconstituted liquid as the starting material and therefore it can only condense the phospholipids content to 15 percent by weight, which is not ideal in terms of cost effectiveness. This is because when the manufacturing method described in Patent Literature 1 is used, the ratio of complex lipids to all fat contained in the material becomes the same as the ratio of complex lipids to all fat contained in the finally obtained powder. Also, it has been suggested that this method, in which adjusting the pH value to the acid range is the only process used before removing casein protein, allows casein protein to remain in the supernatant and this remaining casein protein may cause allergic reaction to milk in the body. Furthermore, the method described in Patent Literature 2, while capable of condensing phospholipids to a high purity level of 90% or more, uses chloroform, diethyl ether, methanol and other organic solvents that are not approved for use in the preparation of food materials. Accordingly, utilizing this method in food applications is difficult and even if the method can be utilized in these applications, the cost becomes high.

On the other hand, known methods for manufacturing ganglioside include a method to obtain fat globule membranes from butter milk (Patent Literature 3) and a method to use an ion exchange resin (Patent Literature 4).

However, it is very difficult to manufacture a composition with high ganglioside content on an industrial scale using the method described in Patent Literature 3. Also, the method described in Patent Literature 4 uses an ion exchange resin and thus is not suitable for mass production applications in industrial settings.

To solve the aforementioned problems presented by prior arts, the inventors had earlier proposed a simple method to manufacture a material with high ganglioside content by using ethanol (Patent Literature 5).

However, while it is capable of manufacturing a material with high ganglioside content in a large quantity, this method uses ethanol and therefore requires a number of complex facilities and processes including explosion-proof facilities. In addition, removing ethanol smell completely from the final product is extremely difficult, which makes it hard to utilize this method in the production of food materials.

Patent Literature 6 refers to a method for obtaining a product enriched in phospho- and sphingolipids which employs ultrafiltration over a membrane.

Patent Literature 7 relates to a process for preparing butter milk and/or butter serum, which comprises decreasing the dissolved oxygen concentration of at least one selected from the group consisting of milk, a milk product, butter milk and butter serum, followed by heating, and optionally fractionizing the heated product.

Patent Literature 8 discloses a method of manufacturing a composition with a high ganglioside content, wherein material containing ganglioside is dispersed in an ethanol solution to make the concentration of ethanol 60 to 95 %, the solution is heated to a temperature higher than 50 °C to generate a precipitate, the precipitate is removed, a supernatant obtained is cooled to a temperature lower than 0°C to generate a precipitate, and the precipitate is recovered.

Patent Literature 9 refers to a specific powder having a high content of complex lipid derived from milk.

Patent Literature 10 relates to a certain prophylactic agent against Helicobacter pylori.

Patent Literature 11 discloses a high cholesterol milk product which contains butter serum. In Non-Patent Literature 1 a specific method for recovering phospholipids from buttermilk using membrane processing is described.

Patent Literature 1: Japanese Patent No. 3103218
Patent Literature 2: Japanese Patent Laid-open No. Hei 3-47192
Patent Literature 3: Japanese Patent Laid-open No. Sho 60-72819
Patent Literature 4: Japanese Patent Laid-open No. Hei 2-207090
Patent Literature 5: Japanese Patent Laid-open No. Hei 9-291094
Patent Literature 6: WO 02/34062
Patent Literature 7: EP-A-1 570 743
Patent Literature 8: EP-A-1 041 081
Patent Literature 9: JP H5-292880
Patent Literature 10: JP H11-263731
Patent Literature 11: JP H5-030903
Non-Patent Literature 1: S. Sachdeva et al. Kieler Milchwirtschaftliche Forschungsberichte 49 (1) 47-68 (1997)

### Summary of the Invention

### Problems to Be Solved by the Invention

Manufacture of a material with high complex lipid content that contains milk-derived phospholipids and ganglioside at high concentrations has not been possible using any of the prior art methods mentioned above.

Accordingly, it is an object of the present invention to solve the problems presented by the aforementioned prior arts by providing a powder with high milk-derived complex lipid content that contains both phospholipids and ganglioside at high concentrations and can be utilized as a material for functional food, mother's milk substitute or drug.

To be specific, it is possible to obtain a powder with high milk-derived complex lipid content that contains protein by 15 to 35 percent by dry weight and fat by 45 to 60 percent by dry weight, wherein the content of milk-derived complex lipids is 20 percent by dry weight or more, in accordance with the present invention. Means for Solving the Problems

The inventors carried out diligent studies to improve the yield of complex lipids such as phospholipids and also manufacture a material that contains such complex lipids at high levels, with the purpose of effectively utilizing milk-derived complex lipids. As a result, the inventors were able to successfully prepare a desired powder by using butter serum or butter serum powder reconstituted liquid as the material and using the process whereby calcium chloride is added to the material, after which casein, being the key protein in the material, is coagulated and precipitated at its isoelectric point, and then the obtained supernatant is filtered by means of ultrafiltration or microfiltration to remove most of residual substances such as other proteins, milk sugar and minerals, and finally the complex lipids are condensed and dried. The obtained powder contained protein by 15 to 35 percent by dry weight, and fat by 45 to 60 percent by dry weight, wherein the content of milk-derived complex lipids was 20 percent by dry weight or more.

With a powder with high milk-derived complex lipid content conforming to the present invention, the protein content can be controlled within a range of 15 to 35 percent by weight, while the fat content can be controlled within a range of 45 to 60 percent by weight, by controlling the conditions of ultrafiltration or microfiltration processing or controlling the conditions under which casein is removed. On the other hand, however, the ratio of complex lipids contained in fat is affected by the fat content in the material butter serum or butter serum powder reconstituted liquid, and also by the composition of this fat content, and therefore it is desirable to understand, prior to the manufacturing process, the fat content and fat composition of the material butter serum and butter serum powder reconstituted liquid.

For your information, in a powder with high milk-derived complex lipid content conforming to the present invention, the sphingomyelin content becomes 4 percent by weight, and the content of glycolipids such as ganglioside becomes 0.3 percent by weight, when the content of phospholipids is 20 percent by weight or more. Effects of the Invention

The present invention refers to a powder containing 20 percent by dry weight or more of milk-derived complex lipid content characterized by containing protein by 15 to 35 percent by dry weight and fat by 45 to 60 percent by dry weight.

A further aspect relates to a method for producing the powder according to present invention, characterized in that the powder is obtained by a method comprising the steps of
- adjusting a pH value of a butter serum or a reconstituted liquid of butter serum powder to 4.0 to 5.0,
- adding calcium chloride and removing produced sediments,
- filtering a supernatant by microfiltration at a fractional grain size of 0.1 to 1.4 µm or ultrafiltration, and then
- drying the obtained concentrate.

Another aspect is directed to the use of the powder according to present invention as a material for a functional food, mother's milk substitute or drug.

The present invention provides a powder with high milk-derived complex lipid content that contains protein by 15 to 35 percent by dry weight, fat by 45 to 60 percent by dry weight, and milk-derived complex lipids by 20 percent by dry weight or more, by adjusting the pH value of a butter serum or butter serum powder reconstituted liquid to a range of 4.0 to 5.0, causing isoelectric precipitation in the most efficient manner to remove casein sediments, filtering the supernatant by means of microfiltration at a fractional grain size of 0.1 to 1.4 µm, or ultrafiltration and then drying the obtained concentrate; wherein, during the process of precipitating and removing casein at its isoelectric point, calcium chloride is added by 0.01 to 0.1 percent by weight relative to the total quantity to promote precipitation so that casein sediments can be removed efficiently even when the mixture is kept stationary.

Also, the obtained powder with high milk-derived complex lipid content can be used as a material for functional food, mother's milk substitute or drug.

### Best Mode for Carrying Out the Invention

The method for manufacturing a powder with high milk-derived complex lipid content conforming to the present invention is explained below.

The content of complex lipids (phospholipids and glycolipids) in butter serum powder is 5 percent by weight, which is 10 times higher than the content in butter milk powder of 0.5 percent by weight. Also, this butter serum is a byproduct of the AMF (Anhydrous Milk Fat; butter oil) manufacturing process and therefore can be obtained inexpensively, which makes it an ideal material for use under the present invention. Accordingly, butter serum or butter serum powder is used as the material and if butter serum powder is used, it is dissolved in water to achieve a concentration of approx. 10 percent by weight to prepare a reconstituted liquid, after which casein, being the key protein of the material, is coagulated and precipitated at its isoelectric point (pH 4.0 to 5.0) to separate and remove the sediments. At this time, calcium chloride is added by 0.01 to 0.05 percent by weight relative to the total quantity to further promote the coagulation of casein and thereby allow for efficient separation of casein. Although the method for separating the sediments is not specifically limited, it is desirable to use centrifugal separation, filter press or decantation, among others. Centrifugal separation can be performed favorably under the condition where the centrifugal acceleration is maintained at 400 G or above. Addition of calcium chloride promotes coagulation and precipitation of casein, which makes it possible to implement a continuous manufacturing process using centrifugal separation. When the protein composition in the supernatant obtained by this operation was checked by means of SDS-PAGE electrophoresis, it was found that casein had been completely removed from the supernatant.

Thus obtained supernatant contains a fat component that contains whey protein, milk sugar, minerals, and complex lipids of interest here. Under the present invention, membrane separation technology is applied to further condense complex lipids. The non-fat component in the supernatant is known to be whey protein with a molecular weight of approx. 18,000, while it is also known that fat exists in an emulsion form in the supernatant and, in particular, complex lipids are dispersed as molecular aggregates. For this reason, it is desirable to condense the complex lipids in the supernatant by using ultrafiltration membranes (with a fractional molecular weight of 5 kDa or more) or microfiltration membranes (with a fractional grain size of 0.1 to 1.4 µm). Although the solid content of the obtained concentrate includes a high content of fat at 45 to 60 percent by weight, this solid content can be pulverized easily using a spray-drying machine commonly utilized in the food industry to obtain a powder containing complex lipids by 20 percent by weight or more.

For your information, while casein can be precipitated and removed through addition of calcium chloride after adjusting the pH value of the material to the acid range, the supernatant still contains residual whey protein, milk sugar, minerals, etc., and thus it is preferable to use ultrafiltration membranes with a fractional molecular weight of 5 kDa or more so that whey protein, milk sugar, minerals, etc., in the supernatant can be removed as much as possible while the fat fraction can be retained in the concentrate. For the same reason, microfiltration membranes with a fractional grain size of 0.1 to 1.4 µm are employed.

Under the present invention, any drying method can be used as deemed appropriate, such as freeze drying, vacuum drying, or drying by hot air, in addition to spray drying. Thus obtained powder conforming to the present invention has low protein and sugar contents, while the fat content is 45 to 60 percent by dry weight and the content of complex lipids is 20 percent by dry weight or more.

Next, the present invention is explained in concrete terms using examples.

### Example 1

A butter serum powder reconstituted liquid with a solid content of 20 percent by weight was prepared by adding 20 kg of material butter serum powder (SM2, Corman S.A.) and 80 kg of water heated to 50°C and then agitating the mixture to dissolve the material. This butter serum powder reconstituted liquid was then mixed with 10% hydrochloric acid to adjust its pH value to 4.4. At the same time, calcium chloride was also mixed by 0.02 percent by weight relative to the total quantity, after which the mixture was kept for 30 minutes at 50°C to coagulate casein. The produced casein sediments were completely removed using a quark separator to obtain a supernatant. This supernatant was filtered through microfiltration membranes with a fractional grain size of 0.1 µm and the concentrate was collected and then freeze-dried to obtain a powder with high milk-derived complex lipid content conforming to the present invention.

When the fat content in the obtained powder was measured using the Roese-Gottlieb method, the powder contained fat by 50 percent by weight.

Further, as a result of measuring the content of phospholipids and the content of ganglioside contained in the fat, 27 percent by weight phospholipids and 1.0 percent by weight ganglioside GD3 were contained.

### [Comparative Example 1]

A butter milk powder reconstituted liquid with a solid content of 20 percent by weight was prepared by adding 20 kg of material butter milk powder (Snow Brand Milk Products Co., Ltd.) and 80 kg of water heated to 50°C and then agitating the mixture to dissolve the material. This butter milk powder reconstituted liquid was then mixed with 10% hydrochloric acid to adjust its pH value to 4.4. At the same time, calcium chloride was also mixed by 0.02 percent by weight relative to the total quantity, after which the mixture was kept for 30 minutes at 50°C to coagulate casein. The produced casein sediments were completely removed using a quark separator to obtain a supernatant. This supernatant was filtered through microfiltration membranes with a fractional grain size of 0.1 µm and the concentrate was collected and then freeze-dried to obtain a powder with high milk-derived complex lipid content conforming to the present invention.

When the fat content in the obtained powder was measured using the Roese-Gottlieb method, the powder contained fat by 40 percent by weight.

However, as a result of measuring the content of phospholipids and the content of ganglioside contained in the fat, just 13 percent by weight phospholipids and just 0.3 percent by weight ganglioside GD3 were contained.

### Example 2

100 kg of material butter serum (Uelzena eG) (solid content: 20 percent by weight) was mixed with 3N hydrochloric acid to adjust its pH value to 4.4. At the same time, calcium chloride was also mixed by 0.03 percent by weight relative to the total quantity, after which the mixture was kept for 30 minutes at 50°C to coagulate casein. The produced casein sediments were completely removed using a quark separator to obtain a supernatant. This supernatant was filtered through microfiltration membranes with a fractional grain size of 0.1 µm and the concentrate was collected and then spray-dried to obtain a powder with high milk-derived complex lipid content conforming to the present invention.

When the fat content in the obtained powder was measured using the Roese-Gottlieb method, the powder contained fat by 50 percent by weight.

Further, as a result of measuring the content of phospholipids and the content of ganglioside contained in the fat, 30 percent by weight phospholipids and 1.0 percent by weight ganglioside GD3 were contained.

### [Comparative Example 2]

100 kg of material butter serum (Uelzena eG) (solid content: 20 percent by weight) was mixed with 3N hydrochloric acid to adjust its pH value to 4.4. Next, the mixture was kept for 30 minutes at 50°C to coagulate casein. An attempt was made to separate the coagulated casein using a quark separator, but casein had not coagulated fully and therefore some casein remained in the supernatant. This supernatant was filtered through microfiltration membranes with a fractional grain size of 0.1 µm and the concentrate was collected and then spray-dried to obtain a powder with high milk-derived complex lipid content conforming to the present invention.

When the fat content in the obtained powder was measured using the Roese-Gottlieb method, the powder contained fat by just 40 percent by weight.

Further, as a result of measuring the content of phospholipids and the content of ganglioside contained in the fat, just 15 percent by weight phospholipids and just 0.5 percent by weight ganglioside GD3 were contained.

These figures were likely resulted from an incomplete coagulation of casein due to absence of calcium chloride, which probably allowed casein to eventually remain in the concentrate after the mixture was filtered through the membranes.

### Example 3

A butter serum powder reconstituted liquid with a solid content of 20 percent by weight was prepared by adding 20 kg of material butter serum powder (SM2, Corman S.A.) and 80 kg of water heated to 50°C and then agitating the mixture to dissolve the material. This butter serum powder reconstituted liquid was then mixed with 10% hydrochloric acid to adjust its pH value to 4.4. At the same time, calcium chloride was also mixed by 0.05 percent by weight relative to the total quantity, after which the mixture was kept for 30 minutes at 50°C to coagulate casein. The produced casein sediments were completely removed using a filter press to obtain a supernatant. This supernatant was filtered through microfiltration membranes with a fractional molecular size of 0.1 µm and the concentrate was collected and then spray-dried to obtain a powder with high milk-derived complex lipid content conforming to the present invention.

When the fat content in the obtained powder was measured using the Roese-Gottlieb method, the powder contained fat by 55 percent by weight.

Further, as a result of measuring the content of phospholipids and the content of ganglioside contained in the fat, 27 percent by weight phospholipids and 1.0 percent by weight ganglioside GD3 were contained.

### [Comparative Example 3]

A butter serum powder reconstituted liquid with a solid content of 20 percent by weight was prepared by adding 20 kg of material butter serum powder (SM2, Corman S.A.) and 80 kg of water heated to 50°C and then agitating the mixture to dissolve the material. This butter serum powder reconstituted liquid was then mixed with 10% hydrochloric acid to adjust its pH value to 4.4. At the same time, calcium chloride was also mixed by 0.05 percent by weight relative to the total quantity, after which the mixture was kept for 30 minutes at 50°C to coagulate casein. The produced casein sediments were completely removed using a filter press to obtain a supernatant. This supernatant was filtered through microfiltration membranes with a fractional molecular size of 2.0 µm and the concentrate was collected and then spray-dried to obtain a powder with high milk-derived complex lipid content conforming to the present invention. When the fat content in the obtained powder was measured using the Roese-Gottlieb method, the powder contained fat by just 35 percent by weight.

Further, as a result of measuring the content of phospholipids and the content of ganglioside contained in the fat, just 15 percent by weight phospholipids and just 0.3 percent by weight ganglioside GD3 were contained.

These figures were likely resulted from the large membrane hole size of 2.0 µm in the microfiltration membranes used in the filtration processing, which probably caused the fat fraction to flow into the permeate.

### Example 4

100 kg of material butter serum (Uelzena eG) (solid content: 20 percent by weight) was mixed with 15% hydrochloric acid to adjust its pH value to 4.5. At the same time,
calcium chloride was also mixed by 0.03 percent by weight relative to the total quantity, after which the mixture was kept for 30 minutes at 60°C to coagulate casein. The produced casein sediments were completely removed using a nozzle separator to obtain a supernatant. This supernatant was filtered through ultrafiltration membranes with a fractional molecular weight of 10 kDa and the concentrate was collected and then freeze-dried to obtain a powder with high milk-derived complex lipid content conforming to the present invention.

When the fat content in the obtained powder was measured using the Roese-Gottlieb method, the powder contained fat by 55 percent by weight.

Further, as a result of measuring the content of phospholipids and the content of ganglioside contained in the fat, 30 percent by weight phospholipids and 0.8 percent by weight ganglioside GD3 were contained.

## Claims

1. A powder containing 20 percent by dry weight or more of milk-derived complex lipid content **characterized by** containing protein by 15 to 35 percent by dry weight and fat by 45 to 60 percent by dry weight.

2. The powder according to Claim 1, **characterized in that** the milk-derived complex lipids comprise 20 percent by dry weight or more of phospholipids and 0.3 percent by dry weight or more of glycolipids.

3. A method for producing the powder according to Claim 1 or 2, comprising the steps of
- adjusting a pH value of a butter serum or a reconstituted liquid of butter serum powder to 4.0 to 5.0,
- adding calcium chloride and removing produced sediments,
- filtering a supernatant by microfiltration at a fractional grain size of 0.1 to 1.4 µm or ultrafiltration, and then
- drying the obtained concentrate.

4. The method according to Claim 3, **characterized in that** calcium chloride is added by 0.01 to 0.05 percent by weight relative to the total quantity.

5. The method according to Claim 3 or 4, **characterized in that** ultrafiltration is performed at a fractional molecular weight of 5 kDa or more.

6. Use of the powder according to Claim 1 or 2 as a material for a functional food, mother's milk substitute or drug.

## Patentansprüche

1. Ein Pulver, das 20 Trockengew.-% oder mehr an einem aus Milch gewonnenen komplexen Lipidgehalt enthält, **dadurch gekennzeichnet, dass** es 15 bis 35 Trockengew.-% an Protein und 45 bis 60 Trockengew.-% an Fett enthält.

2. Das Pulver gemäß Anspruch 1, **dadurch gekennzeichnet, dass** die aus Milch gewonnenen komplexen Lipide 20 Trockengew.-% oder mehr an Phospholipiden und 0,3 Trockengew.-% oder mehr an Glycolipiden umfasst.

3. Ein Verfahren zur Herstellung des Pulvers gemäß Anspruch 1 oder 2, umfassend die Schritte:
- Einstellen eines pH-Werts eines Butterserums oder einer rekonstituierten Flüssigkeit eines Butterserumpulvers auf 4,0 bis 5,0,
- Hinzufügen von Calciumchlorid und Entfernen der entstandenen Sedimente
- Filtern einer überstehenden Flüssigkeit durch Mikrofiltration bei einer fraktionierten Korngröße von 0,1 bis 1,4 µm oder Ultrafiltration, und anschließend
- Trocknen des erhaltenen Konzentrats.

4. Das Verfahren gemäß Anspruch 3, **dadurch gekennzeichnet, dass** 0,01 bis 0,05 Gew.-% Calciumchlorid bezogen auf die Gesamtmenge hinzugefügt wird.

5. Das Verfahren gemäß Anspruch 3 oder 4, **dadurch gekennzeichnet, dass** die Ultrafiltration bei einem fraktionierten Molekulargewicht von 5 kDa oder mehr durchgeführt wird.

6. Verwendung des Pulvers gemäß Anspruch 1 oder 2 als ein Material für ein Functional Food, Muttermilchersatz oder Arzneimittel.

## Revendications

1. Poudre contenant 20 % en poids sec ou plus d'une teneur en lipide complexe dérivé du lait, **caractérisée en ce qu'**elle contient 15 à 35 % en poids sec de protéines et 45 à 60 % en poids sec de matières grasses.

2. Poudre selon la revendication 1, **caractérisée en ce que** les lipides complexes dérivés du lait comprennent 20 % en poids sec ou plus de phospholipides et 0,3 % en poids sec ou plus de glycolipides.

3. Méthode de fabrication de la poudre selon la revendication 1 ou 2, comprenant les étapes consistant à :
- ajuster à un pH de 4,0 à 5,0 un sérum butyrique ou un liquide reconstitué à partir d'une poudre de sérum butyrique,
- ajouter du chlorure de calcium et éliminer les sédiments produits,
- filtrer un surnageant par microfiltration à une granulométrie fractionnaire de 0,1 à 1,4 µm ou par ultrafiltration, et puis
- sécher le concentré obtenu.

4. Méthode selon la revendication 3, **caractérisée en ce que** le chlorure de calcium est ajouté à un taux de 0,01 à 0,05 % en poids, par rapport à la quantité totale.

5. Méthode selon la revendication 3 ou 4, **caractérisée en ce que** l'ultrafiltration est réalisée à un poids moléculaire fractionnaire de 5 kDa ou plus.

6. Utilisation de la poudre selon la revendication 1 ou 2 comme matière pour un aliment fonctionnel, un substitut du lait maternel ou un médicament.
